# EUROPÄISCHE PATENTSCHRIFT

(11) **EP 1 181 762 B1**
(45) Veröffentlichungstag und Bekanntmachung des Hinweises auf die Patenterteilung: **21.07.2004**
(21) Anmeldenummer: 00940237.1
(22) Anmeldetag: 08.05.2000
(51) Int. Cl.: H02K 1/17, H02K 23/04

(54) **DAUERMAGNETERREGTER ELEKTROMOTOR, INSBESONDERE MIT VERÄNDERLICHER DREHZAHL**
PERMANENT-MAGNET-EXCITED ELECTROMOTOR, ESPECIALLY WITH A VARIABLE ROTATIONAL SPEED
MOTEUR ELECTRIQUE EXCITE PAR DES AIMANTS PERMANENTS, NOTAMMENT A VITESSE DE ROTATION VARIABLE

(30) Priorität: 31.05.1999 EP 99110494
(43) Veröffentlichungstag der Anmeldung: 27.02.2002
(73) Patentinhaber: SIEMENS AKTIENGESELLSCHAFT, 80333 München (DE)
(72) Erfinder: GÖB, Werner, D-97273 Kürnach (DE); DILLER, Hannelore, D-97218 Gerbrunn (DE)
(86) Internationale Anmeldenummer: PCT/EP2000/004114
(87) Internationale Veröffentlichungsnummer: WO 2000/074208

(56) Entgegenhaltungen:
- DE-U- 9 312 375
- US-A- 3 258 622
- US-A- 4 155 021

## Beschreibung

Die Erfindung bezieht sich auf einen dauermagneterregten Elektromotor, insbesondere mit veränderlicher Drehzahl gemäß Patentanspruch 1; ein dauermagneterregter Elektromotor mit durch zwischen ihre tangentialen Stirnflächen eingedrückte Spannelemente an den Innenumfang eines Motorgehäuses angedrückten Magnetschalen ist z.B. durch die US-PS 3 258 622 bekannt; derartige Spannelemente bestehen üblicherweise aus Federstahl und sind als Massen-Serienartikel aus entsprechendem Flach- bzw. Rundmaterial gestanzt bzw. geformt.

Insbesondere bei Elektromotoren mit veränderlicher Drehzahl besteht die Gefahr eines unerwünschten Betriebsgeräusches durch Klirren der Spannelemente durch vibrierendes Anschlagen an den Innenumfang des Motorgehäuses, vorzugsweise bei einer oder mehreren Resonanzfrequenzen. Zur Abhilfe könnte z.B. eine gesonderte zusätzliche Befestigung der Spannelemente an dem Motorgehäuse durch Anschrauben, Annieten bzw. Ankleben vorgesehen werden. Eine solche Maßnahme widerspricht jedoch der Forderung nach Minimierung des Fertigungs- bzw. Montageaufwandes für Massenserienartikel, z.B. Stell- bzw. Servomotore für elektrische Hilfsantriebe wie Lüfter in Kraftfahrzeugen.

Gemäß Aufgabe vorliegender Erfindung soll ein mit geringem Fertigungs- und Montageaufwand als Massenserienartikel fertigbarer dauermagneterregter Elektromotor, insbesondere für einen Lüfterantrieb in einem Kraftfahrzeug, geschaffen werden, der sich betriebsmäßig durch eine hohe Geräuscharmut auszeichnet.

Die Lösung dieser Aufgabe gelingt erfindungsgemäß durch einen dauermagneterregten Elektromotor gemäß Patentanspruch 1 und/oder Patentanspruch 3; vorteilhafte Ausgestaltungen der Erfindung sind jeweils Gegenstand der Unteransprüche.

Die erfindungsgemäß auf einfache Weise mit einer schalldämmenden Beschichtung versehenen Spannelemente bzw. diese teilweise ersetzenden Distanzelemente und/oder der Innenfläche des Motorgehäuses sind in üblicher Montagetechnologie zwischen den tangentialen Stirnflächen der Magnetschalen lediglich einzustecken. Eine gesonderte zusätzliche Befestigung zur Verhinderung des Entstehens eines Spannelemente-Klirrens bzw. Distanzelemente-Klirrens kann in für die Herstellung eines preiswerten Massen-Serienartikels vorteilhafter Weise entfallen; eine gegebenenfalls in bestimmten Drehzahlbereichen bei größeren Fertigungs- bzw. Einbautoleranzen durch Resonanz auftretende Spannelemente-Vibration kann hingenommen werden, da Geräusche aufgrund einer Berührung der Spannelemente bzw. der Distanzelemente mit dem Motorgehäuse durch die erfindungsgemäße Beschichtung in hinreichendem Maße gedämmt werden. Bei gleichzeitiger Beschichtung der Spann- bzw. Distanzelemente einerseits und der Innenfläche des Motorgehäuses andererseits wird die Geräuschdämmung verstärkt.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: in einem radialen Schnitt einen zweipoligen, dauermagneterregten Motor mit am Innenumfang eines Motorgehäuses dadurch fixierten Magnetschalen, daß zwischen deren tangential benachbarte Stirnflächen als Spannelemente Bügel-Steckfedern eingedrückt sind,
- FIG 2: in einem radialen Schnitt einen vierpoligen, dauermagneterregten Motor mit am Innenumfang eines Motorgehäuses dadurch fixierten Magnetschalen, daß zwischen deren tangential benachbarte Stirnflächen als Spannelemente Bügel-Steckfedern bzw. elastische Distanzelemente eingedrückt sind,
- FIG 3: eine vergrößerte Ausschnittsdarstellung aus der Anordnung gemäß FIG 1 mit einer geräuschdämmenden Elastomer-Beschichtung an dem radial äußeren Wandteil des Spannelementes,
- FIG 4: eine vergrößerte Ausschnittsdarstellung aus der Anordnung gemäß FIG 1 mit einer geräuschdämmenden Pulverbeschichtung über die gesamte Umfangsfläche des Spannelementes,

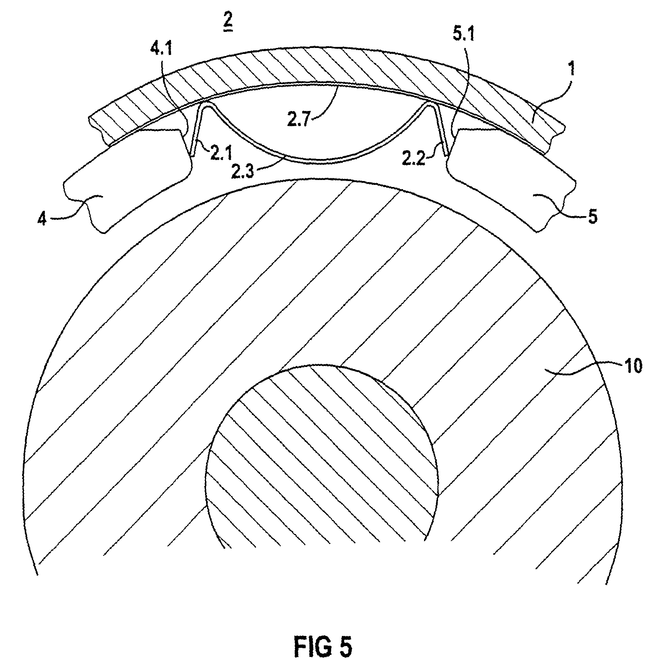

- FIG 5: eine vergrößerte Ausschnittsdarstellung aus der Anordnung gemäß FIG 1 mit einer geräuschdämmenden Pulver-Beschichtung über die gesamte Innen-Umfangsfläche des Motorgehäuses.

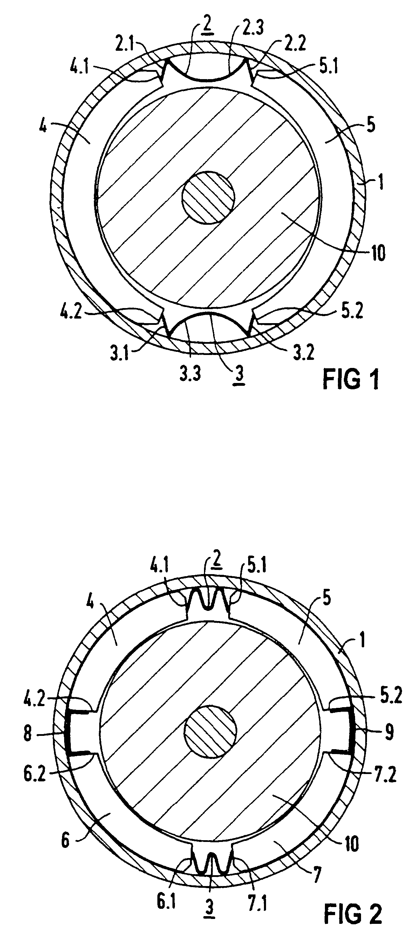

FIG 1 zeigt einen zweipoligen dauermagneterregten Motor mit am Innenumfang seines Motorgehäuses 1 fixierten Magnetschalen 4;5 und einem im Schnitt lediglich angedeuteten Rotor 10. Zur Lagefixierung der Magnetschalen 4;5 dienen zwischen deren jeweils tangential benachbarte Stirnflächen, vorzugsweise radial, zwischengesteckte Spannelemente 2;3 in Form von Bügel-Steckfedern.

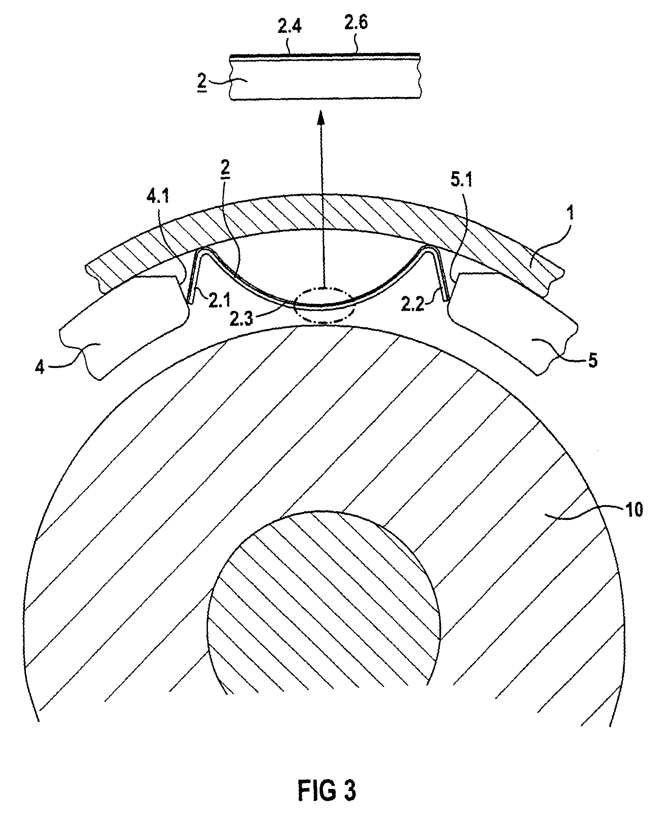

Jedes Spannelement 2;3 besteht im wesentlichen - wie insbesondere aus FIG 3 ersichtlich - aus zwei Seitenschenkeln 2.1;2.2 bzw. 3.1;3.2 und einen M-förmigen, die Seitenschenkel verbindenden Grundschenkel 2.3;3.3. Die Spannelemente 2;3 sind radial derart in die Zwischenräume zwischen den tangential benachbarten Stirnflächen der Magnetschalen 4;5 radial eingedrückt, daß sie mit ihren nach radial innen weisenden freien Enden ihrer Seitenschenkel 2.1;2.3 bzw. 3.1;3.2 gegen die Stirnflächen 4.1;5.1 bzw. 4.2;5.2 der Magnetschalen 4;5 gedrückt werden. Dabei sind die Grundschenkel 2.3;3.3 der Spannelemennte 2;3 elastisch derart gespannt, daß sie den Andruck der Seitenschenkel 2.1;2.2 bzw. 3.1;3. der Spannelemente 2;3 und damit den Andruck der Magnetschalen 4;4 an das Motorgehäuse 1 in vorteilhafter Weise verstärken.

FIG 2 zeigt den radialen Schnitt durch einen vierpoligen Motor mit vier Magnetschalen 4-7, wobei jeweils nur an einem tangentialen Ende einer Magnetschale zwischen den benachbarten Stirnflächen 4.1;5.1 bzw. 6.1;7.1 ein Spannelement 2;3 radial eingedrückt ist. Zwischen den verbleibenden tangential benachbarten Stirnflächen 4.1;6.2 bzw. 5.2;7.2 der Magnetschalen 4-7 sind unelastische Distanzhalter 8 bzw.9 selbsthaltend radial eingesteckt.

Die zweckmäßigerweise aus einfachem Federstahl bestehenden Spannelemente 2;3 sind derart ohne gesonderte formschlüssige Fixierung am Motorgehäuse 1 zusammen mit den Magnetschalen fixierbar; diese Fixierung wird unterstützt, wenn die Stirnflächen der Magnetschalen derart verlaufen, daß der radial innere tangentiale Abstand kleiner ist als der radial äußere motorgehäuseseitige Abstand, da dadurch eine zusätzliche, in Richtung auf das Motorgehäuse 1 gerichtete Andruckkraft entsteht. Der Grundschenkel der vorzugsweise M-förmigen Spannelemente 2;3 kann trotzdem mit einer gemäß dem radial äußeren motorgehäuseseitigen, u.U. größeren tangentialen Abstand benachbarter Stirnflächen der Magnetschalen entsprechenden tangentialen Länge und somit maximaler Federkraft ausgeführt werden, da er bei seiner radialen inneren engeren Spaltöffnung aufgrund seiner Bauform bzw. Elastizität entsprechend zusammendrückbar ist.

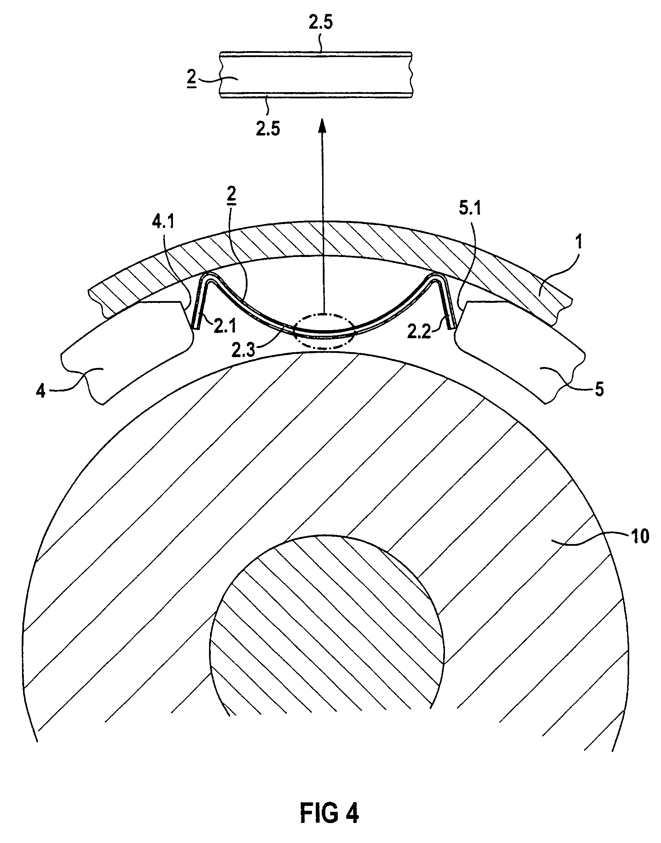

FIG 3,4 zeigen jeweils anhand einer Ausschnittsvergrößerung aus FIG 1 ein einzelnes Spannelement 2 mit einer nur radial außenflächenseitigen und somit motorgehäuseseitigen schalldämmenden Elastomer-Beschichtung 2.4 gemäß FIG 3 sowie mit einer schalldämmenden Pulverbeschichtung 2.5 an der gesamten Außenumfangsfläche gemäß FIG 4. In ähnlicher Weise können auch die jeweiligen Distanzelemente 8;9 mit der einen oder anderen schalldämmenden oberflächenseitigen Beschichtung versehen sein.

Spannelemente mit einer Elastomer-Beschichtung werden zweckmäßigerweise aus einem Federstahlflachband mit bereits auf einer Oberseite versehener Beschichtung, insbesondere aus einem von einem Coil abgewickelten beschichteten Bandmaterial, gestanzt und geformt.

Für Spannelemente mit einer Pulverbeschichtung wird zweckmäßigerweiser von bereits gestanzten und geformten Einzelteilen ausgegangen, auf die anschließend in üblicher Fertigungstechnologie eine Pulverbeschichtung aufgeschmolzen wird; dadurch ist es möglich, bisher bereits zur Verwendung vorgesehene Elemente zu verwenden und lediglich im erfindungsgemäßen Sinne zur Geräuschdämmung durch eine Beschichtung zu vervollkommen.

In ähnlicher Weise kann z.B. eine Pulverbeschichtung 2.7 auf die Innen-Umfangsflche des Motorgehäuses 1 derart aufgetragen sein, daß bei Gefahr einer Schwingungsbewegung der Spannelemente 2;3 bzw. der Distanzelemente 8;9 diese nur unter Zwischenschaltung einer gehäuseseitig auftragenden geräuschdämmenden Beschichtung mit dem Motorgehäuse 1 in Berührung kommen können.

Insbesondere bei Verwendung einner schalldämmenden Elastomer-Beschichtung 2.4 ist nach einer Ausgestaltung vorgesehen, auf diese noch eine reibungsmindernde Gleitlack-Beschichtung 2.6 aufzutragen; dadurch läßt sich sowohl der Rüttlerzuführvorgang der Spannelemente in einem Bestückungsautomaten als auch der eigentliche kraftschlüssige Einsteckvorgang der Spannelemente bzw. der Distanzelemente zwischen den Stirnflächen der Magnetschalen ohne Gefahr einer Absplittung des spröden Magnetmaterials vereinfachen.

## Patentansprüche

1. Dauermagneterregter Elektromotor, insbesondere mit veränderlicher Drehzahl,
- mit einem Motorgehäuse (1);
- mit am Innenumfang des Motorgehäuses (1) fixierbaren Magnetschalen (4-7);
- mit einer Fixierung der Magnetschalen (4-7) an dem Innenumfang des Motorgehäuses (1) mittels zwischen die tangentialen Stirnflächen benachbarter Magnetschalen eindrückbarer entweder Spannelemente (2;3) oder Spannelemente (2;3) und Distanzelemente (8;9);
- mit einer geräuschdämmenden Beschichtung (2.4;2.5;2.6) der Spannelemente (2;3) und gegebenenfalls der Distanzelemente (8;9) zumindest an ihren dem Motorgehäuse (1) zugewandten Außenflächen.

2. Dauermagneterregter Elektromotor nach Anspruch 1
- mit einer geräuschdämmenden Beschichtung der Spannelemente (2;3) oder der Distanzelemente (8;9) über ihre gesamte Außenfläche.

3. Dauermagneterregter Elektromotor, insbesondere mit veränderlicher Drehzahl
- mit einem Motorgehäuse (1);
- mit am Innenumfang des Motorgehäuses (1) fixierbaren Magnetschalen (4-7);
- mit einer Fixierung der Magnetschalen (4-7) an dem Innenumfang des Motorgehäuses (1) mittels zwischen die tangentialen Stirnflächen benachbarter Magnetschalen eindrückbarer entweder Spannelemente (2;3) oder Spannelemente (2;3) und Distanzelemente (8;9);
- mit einer geräuschdämmenden Beschichtung (2.7) des Innenumfangs des Motorgehäuses (1) zumindest im Bereich seiner den Spannelementen (2;3) und gegebenenfalls den Distanzelementen (8;9) zugewandten Innenflächen.

4. Dauermagneterregter Elektromotor nach Anspruch 3
- mit einer geräuschdämmenden Beschichtung des Motorgehäuses (1) über seine gesamte Innenfläche.

5. Dauermagneterregter Elektromotor nach zumindest einem der Ansprüche 1-4
- mit einer geräuschdämmenden Beschichtung (2.4) in Form eines Elastomer.

6. Dauermagneterregter Elektromotor nach Anspruch 5
- mit einer geräuschdämmenden Beschichtung (2.4) in Form eines Acrylnitrit-Butadien-Kautschuk (NBK).

7. Dauermagneterregter Elektromotor nach zumindest einem der Ansprüche 1-4
- mit einer geräuschdämmenden Beschichtung (2.5;2.6) in Form einer Pulver-Beschichtung.

8. Dauermagneterregter Elektromotor nach Anspruch 1 und/oder 2,
- mit aus einem Flachband, insbesondere aus einem Federstahlband oder dergleichen, gebildeten Spannelement oder Distanzelement;
- mit einem Auftrag der geräuschdämmenden Beschichtung (2.4) auf die dem Motorgehäuse (1) zugewandten Flachseite des Spannelementes oder des Distanzelementes.

9. Dauermagneterregter Elektromotor nach zumindest einem der Ansprüche 1-7, insbesondere nach Anspruch 5 und/oder 6
- mit einer zusätzlichen Außenbeschichtung der geräuschdämmenden Beschichtung (2.4) in Form einer Gleitlack-Beschichtung (2.7).

10. Hilfsantrieb in einem Kraftfahrzeug, insbesondere Lüfterantrieb in einem Heiz- bzw. Klimagerät eines Kraftfahrzeuges,
- mit einem dauermagneterregten Elektromotor nach zumindest einem der Ansprüche 1-9.

## Claims

1. Permanent-field electric motor, in particular with variable speed,
- with a motor housing (1);
- with magnetic shells (4-7) which can be fixed on the inner circumference of the motor housing (1);
- with the magnetic shells (4-7) being fixed on the inner circumference of the motor housing (1) by means of either tensioning elements (2; 3) or tensioning elements (2; 3) and spacing elements (8; 9) which can be pressed in between the tangential faces of adjacent magnetic shells;
- with a noise-suppressing coating (2.4; 2.5; 2.6) of the tensioning elements (2; 3) and eventually of the spacing elements (8; 9) at least on their external surfaces facing the motor housing (1).

2. Permanent-field electric motor according to Claim 1
- with a noise-suppressing coating of the tensioning elements (2; 3) or of the distance elements (8; 9) over their entire outer surface.

3. Permanent-field electric motor, in particular with variable speed,
- with a motor housing (1);
- with magnetic shells (4-7) which can be fixed on the inner circumference of the motor housing (1);
- with the magnetic shells (4-7) being fixed on the inner circumference of the motor housing (1) by means of either tensioning elements (2; 3) or tensioning elements (2; 3) and spacing elements (8; 9) which can be pressed in between the tangential faces of adjacent magnetic shells;
- with a noise-suppressing coating (2.7) of the inner circumference of the motor housing (1) at least in the area of its inner surfaces facing the tensioning elements (2; 3) and eventually the spacing elements (8; 9).

4. Permanent-field electric motor according to Claim 3,
- with a noise-suppressing coating of the motor housing (1) over its entire inner surface.

5. Permanent-field electric motor according to at least one of Claims 1 to 4,
- with a noise-suppressing coating (2.4) in the form of an elastomer.

6. Permanent-field electric motor according to Claim 5,
- with a tensioning element or spacing element formed from a flat band, in particular from a spring steel band or similar;
- with a noise-suppressing coating (2.4) in the form of an acrylonitrile butadine rubber (NBR).

7. Permanent-field electric motor according to at least one of Claims 1 to 4,
- with a noise-suppressing coating (2.5; 2.6) in the form of a powder coating.

8. Permanent-field electric motor according to Claim 1 and/or 2,
- with an application of the noise-suppressing coating (2.4) onto the flat side of the tensioning element or of the spacing element facing the motor housing (1).

9. Permanent-field electric motor according to at least one of Claims 1 to 7, in particular according to Claim 5 and/or 6
- with an additional outer coating of the noise-suppressing coating (2.4) in the form of a lubricating varnish coating (2.7).

10. Helper drive in a motor vehicle, in particular a fan drive in a heating unit or air-conditioner of a motor vehicle,
- with a permanent-field electric motor according to at least one of Claims 1 to 9.

## Revendications

1. Moteur électrique excité par aimant permanent, en particulier à vitesse de rotation variable, comportant
- un carter de moteur (1) ;
- des coques aimantées (4 à 7) qui se fixent sur la périphérie intérieure du carter de moteur (1) ;
- une fixation des coques aimantées (4 à 7) sur la périphérie intérieure du carter de moteur (1) au moyen soit d'éléments de serrage (2, 3) soit d'éléments de serrage (2, 3) et d'éléments d'écartement (8, 9) qui peuvent être pressés entre les faces d'extrémité tangentiellement voisines des coques aimantées ;
- un revêtement insonorisant (2.4, 2.5, 2.6) des éléments de serrage (2, 3) et le cas échéant des éléments d'écartement (8, 9), au moins sur leurs faces externes dirigées vers le carter de moteur (1).

2. Moteur électrique excité par aimant permanent selon la revendication 1, comportant un revêtement insonorisant des éléments de serrage (2, 3) ou des éléments d'écartement (8, 9) sur toute leur face extérieure.

3. Moteur électrique excité par aimant permanent, en particulier à vitesse de rotation variable, comportant
- un carter de moteur (1) ;
- des coques aimantées (4-7) qui se fixent sur la périphérie intérieure du carter de moteur (1) ;
- une fixation des coques aimantées (4-7) sur la périphérie intérieure du carter de moteur (1) au moyen soit d'éléments de serrage (2, 3) soit d'éléments de serrage (2, 3) et d'éléments d'écartement (8, 9) qui peuvent être pressés entre les faces d'extrémité tangentiellement voisines des coques aimantées adjacentes ;
- un revêtement insonorisant (2.7) de la périphérie intérieure du carter de moteur (1), au moins dans la zone de ses faces intemes dirigées vers les éléments de serrage (2, 3) et le cas échéant les éléments d'écartement (8, 9).

4. Moteur électrique excité par aimant permanent selon la revendication 3, comportant un revêtement insonorisant du carter de moteur (1) sur toute sa face interne.

5. Moteur électrique excité par aimant permanent selon au moins l'une des revendications 1-4, comportant un revêtement insonorisant (2.4) sous forme d'élastomère.

6. Moteur électrique excité par aimant permanent selon la revendication 5, comportant un revêtement insonorisant (2.4) sous forme de caoutchouc acrylonitrile-butadiène.

7. Moteur électrique excité par aimant permanent selon au moins l'une des revendications 1-4, comportant un revêtement insonorisant (2.5, 2.6) sous forme de revêtement poudreux.

8. Moteur électrique excité par aimant permanent selon la revendication 1 et/ou 2, comportant un élément de serrage ou un élément d'écartement formé à partir d'un feuillard, en particulier d'un feuillard d'acier ou analogue, etune application du revêtement insonorisant (2.4) sur la surface dirigée vers le carter-moteur (1) de l'élément de serrage ou de l'élément d'écartement.

9. Moteur électrique excité par aimant permanent selon au moins l'une des revendications 1 à 7, en particulier selon les revendications 5 et/ou 6, comportant un revêtement extérieure supplémentaire du revêtement insonorisant (2.4) sous forme de revêtement en laque de glissement (2.7).

10. Accessoire d'un véhicule automobile, en particulier entraînement de ventilateur dans un appareil de chauffage ou de climatisation d'un véhicule automobile, comportant un moteur électrique excité par un aimant permanent selon au moins l'une des revendications 1 à 9.
